Europäisches Patentamt

(19) European Patent Office

Office européen des brevets

(11) Publication number: **0 045 170 B1**

(12) **EUROPEAN PATENT SPECIFICATION**

(45) Date of publication of patent specification: **03.02.88**

(21) Application number: **81303336.2**

(22) Date of filing: **21.07.81**

(51) Int. Cl.⁴: **B 01 J 21/00, C 10 G 11/04, C 10 L 10/00**

(54) A process for combusting sulfur-containing material, a hydrocarbon conversion process including such a combustion process in a catalyst regeneration step and a composition suitable for use as a catalyst in the hydrocarbon conversion process.

(30) Priority: **29.07.80 US 173315**
**29.07.80 US 173320**

(43) Date of publication of application:
**03.02.82 Bulletin 82/05**

(45) Publication of the grant of the patent:
**03.02.88 Bulletin 88/05**

(84) Designated Contracting States:
**BE DE FR GB**

(56) References cited:
**EP-A-0 010 362**
**DE-A-1 952 232**
**GB-A-1 561 629**
**GB-A-2 023 639**
**US-A-4 055 513**
**US-A-4 191 115**

(73) Proprietor: **Katalistiks International, Incorporated**
**39 Old Ridgebury Road**
**Danbury, Connecticut 06817-0001 (US)**

(72) Inventor: **Yoo, Jin Sun**
**2315 Mast Court**
**Flossmoor Illinois 60422 (US)**
Inventor: **Jaecker, John Alvin**
**2352 Clyde Terrace**
**Homewood Illinois 60430 (US)**

(74) Representative: **Cropp, John Anthony David et al**
**MATHYS & SQUIRE 10 Fleet Street**
**London, EC4Y 1AY (GB)**

The file contains technical information submitted after the application was filed and not included in this specification

EP 0 045 170 B1

Courier Press, Leamington Spa, England.

**Description**

Background of the invention

The invention relates to the combusting of solid, sulfur-containing material in a manner to effect a reduction in the emission of sulfur oxides to the atmosphere and especially the catalytic cracking of sulfur-containing hydrocarbon feedstocks in a manner to effect a reduction in the amount of sulfur oxides emitted from the regeneration zone of a hydrocarbon catalytic cracking unit, and also to compositions suitable for use in such combusting and catalytic cracking processes.

Typically, catalytic cracking of hydrocarbons takes place in a reaction zone at hydrocarbon cracking conditions to produce at least one hydrocarbon product and to cause carbonaceous material (coke) to be deposited on the catalyst. Additionally, some sulfur, originally present in the feed hydrocarbons, may also be deposited, e.g., as a component of the coke, on the catalyst. It has been reported that approximately 50% of the feed sulfur is converted to $H_2S$ in the FCC reactor, 40% remains in the liquid products and about 4 to 10% is deposited on the catalyst. These amounts vary with the type of feed, rate of hydrocarbon recycle, steam stripping rate, the type of catalyst, reactor temperature, etc.

Sulfur-containing coke deposits tend to deactivate cracking catalyst. Cracking catalyst is advantageously continuously regenerated, by combustion with oxygen-containing gas in a regeneration zone, to low coke levels, typically below about 0.4% by weight, to perform satisfactorily when it is recycled to the reactor. In the regeneration zone, at least a portion of sulfur, along with carbon and hydrogen, which is deposited on the catalyst, is oxidized and leaves in the form of sulfur oxides ($SO_2$ and $SO_3$, hereinafter referred to as "SOx") along with substantial amounts of CO, $CO_2$ and $H_2O$.

A considerable amount of study and research effort has been directed to reducing oxide of sulfur emissions from various gaseous streams, including those from the stacks of the regenerators of FCC units. However, the results leave much to be desired. Many metallic compounds have been proposed as materials to pick up oxides of sulfur in FCC units (and other desulfurization applications) and a variety of supports, including particles of cracking catalysts and "inerts", have been suggested as carriers for active metallic reactants. Many of the proposed metallic reactants lose effectiveness when subjected to repeated cycling. Thus when Group II metal oxides are impregnated on FCC catalysts or various supports, the activity of the Group II metals is rapidly reduced under the influence of the cyclic conditions. Discrete alumina particles, when combined with silica-containing catalyst particles and subjected to steam at elevated temperatures, e.g., those present in FCC unit regenerators, are of limited effectiveness in reducing SOx emissions. Incorporation of sufficient chromium on an alumina support to improve SOx sorption results in undesirably increased coke and gas production.

The copending European Patent Application 85103383-7 (EP—A—158858) divided out of the present application discloses a process for combusting solid, sulfur-containing material by contacting the material with gaseous oxygen in a combustion zone at combustion conditions to produce combustion products including at least one sulfur oxide at least a portion of which is sulfur trioxide, characterised in that the contacting is carried out in the presence of discrete particles containing more than 50% by weight of metal-containing spinel and optionally a minor amount of a rare earth metal component. The amount of sulfur oxide emitted from said combustion zone is thereby reduced.

The present invention provides an improved composition and process for reducing emissions of sulfur oxides, especially from the regeneration zones of hydrocarbon catalytic cracking units, and also provides an improved hydrocarbon conversion catalyst.

According to the present invention, there is provided a hydrocarbon conversion process for converting a sulfur-containing hydrocarbon feedstock which comprises (1) contacting said feedstock with solid particles capable of promoting the conversion of said feedstock at hydrocarbon conversion conditions in at least one reaction zone to produce at least one hydrocarbon product and to cause deactivating sulfur-containing carbonaceous material to be formed on said solid particles thereby forming deposit-containing particles; (2) contacting said deposit-containing particles with an oxygen-containing vaporous medium at conditions to combust at least a portion of said carbonaceous deposit material in at least one regeneration zone to thereby regenerate at least a portion of the hydrocarbon conversion catalytic activity of said solid particles and to form a regeneration zone flue gas containing sulfur trioxide; and (3) repeating steps (1) and (2) periodically, characterised in that there are used, in intimate admixture with said solid particles, discrete entities having a composition different from said solid particles and comprising at least one metal-containing spinel including a first metal and a second metal having a valency higher than the valence of said first metal and said spinel having a surface area of 25 $m^2/g$ to 600 $m^2/g$, said discrete entities being present in an amount sufficient to reduce the amount of sulfur oxides in said flue gas.

The hydrocarbon conversion is preferably carried out in the substantial absence of added free hydrogen and the discrete entities preferably comprise a major amount by weight, e.g., at least about 50% by weight, of said spinel which preferably is an alkaline earth metal-containing spinel.

More preferably, the discrete entities further comprise a minor amount of at least one rare earth metal, preferably, cerium, component associated with the spinel. In one preferred embodiment, the discrete entities also include a minor, catalytically effective amount of at least one crystalline aluminosilicate effective to promote hydrocarbon conversion, e.g., cracking at hydrocarbon conversion conditions. The discrete entities are present in an amount sufficient to reduce the amount of sulfur oxides in the regeneration zone effluent when used in a reaction zone-regeneration zone system as described herein.

In one preferred embodiment, the particulate material, more preferably the discrete entities, further comprise a minor amount of at least one additional metal, e.g., a Group VIII platinum group metal, component capable of promoting the oxidation of sulfur dioxide to sulfur trioxide at the conditions in the regeneration zone.

The preferred platinum group metals are palladium and platinum, most preferably platinum.

The preferred relative amounts of the solid particles and discrete entities are 80 to 99 parts and 1 to 20 parts by weight, respectively. This catalyst system is especially effective for the catalytic cracking of a hydrocarbon feedstock to lighter, lower boiling products. The present catalyst system preferably also has improved carbon monoxide oxidation catalytic activity stability.

The invention also provides a composition of matter characterised in that it comprises, in intimate admixture, (a) solid particles capable of promoting hydrocarbon conversion at hydrocarbon conversion conditions, said solid particles including at least one crystalline aluminosilicate capable of promoting said hydrocarbon conversion, and (b) discrete entities having a composition different from said solid particles and comprising at least one metal-containing spinel which includes a first metal and a second metal having a valency higher than the valence of said first metal and said spinel having a surface area of 25 $m^2/g$ to 600 $m^2/g$, said solid particles being present in a greater amount, by weight, than the discrete entities.

The hydrocarbon conversion process according to the present invention can be used to advantage with the catalyst being disposed in any conventional reactor-regenerator system, in ebullating catalyst bed systems, in systems which involve continuously conveying or circulating catalyst between reaction zone and regeneration zone and the like. Circulating catalyst systems are preferred. Typical of the circulating catalyst bed systems are the conventional moving bed and fluidized bed reactor-regenerator systems. Both of these circulating bed systems are conventionally used in hydrocarbon conversion, e.g., hydrocarbon cracking, operations with the fluidized catalyst bed reactor-regenerator systems being preferred.

The catalyst system used in accordance with certain embodiments of the invention is comprised of a mixture of two types of solid particles.

Although the presently useful solid particles and discrete entities may be used as a physical admixture of separate particles, in one embodiment the discrete entities are combined as part of the solid particles. That is, the discrete entities, e.g., comprising calcined microspheres containing metal-containing spinel, and preferably, at least one additional metal component, are combined with the solid particles, e.g., during the manufacture of the solid particles, to form particulate bodies which function as both the presently useful solid particles and discrete entities which preferably exists as a separate and distinct phase. One preferred method for providing the particulate bodies which combine the solid particles and discrete entities is to calcine the discrete entities prior to incorporating the discrete entities into the particulate bodies.

The form, i.e., particle size, of the present catalyst particles, e.g., both solid particles and discrete entities, as well as the particulate bodies, is not critical to the present invention and may vary depending, for example, on the type of reaction-regeneration system employed. Such catalyst particles may be formed into any desired shape such as pills, cakes, extrudates, powders, granules, spheres and the like, using conventional methods. With regard to fluidized catalyst bed systems, it is preferred that the major amount by weight of the present catalyst particles have a diameter in the range of 10 µm to 250 µm, more preferably 20 µm to 150 µm.

The solid particles are capable of promoting the desired hydrocarbon conversion. The solid particles are further characterized as having a composition (i.e., chemical make-up) which is different from the discrete entities. In one preferred embodiment, the solid particles (or the solid particles portion of the combined particulate bodies described above) are substantially free of metal-containing spinel, e.g., alkaline earth metal-containing spinel.

In one aspect of the present invention, the discrete entities comprise an effective amount of at least one metal-containing spinel, preferably alkaline earth metal-containing spinel, and preferably, a minor, catalytically effective amount of at least one crystalline aluminosilicate capable of promoting hydrocarbon conversion at hydrocarbon conversion conditions. In the event such discrete entities comprise alkaline earth metal-containing spinel, it is more preferred that such discrete entities include a minor amount of at least one rare earth metal component, preferably a cerium component, associated with the spinel. In another aspect of the present invention, the discrete entities, whether present as a separate and distinct particle and/or combined with the solid particles in a single, preferably substantially uniform, mass of combined particulate bodies and/or the solid particles and/or one or more other type of particles (i.e., having compositions different from the present solid particles and discrete entities) further comprise a minor amount of at least one additional metal, e.g., platinum group metal, component capable of promoting the oxidation of sulfur dioxide to the sulfur trioxide at the conditions in the combusion, e.g., catalyst regeneration, zone. For example, an effective amount of at least one sulfur oxide oxidation catalytic component, e.g., metal or compounds of metals selected from Group VI, IIB, IVB, VIA, VIB, VIIA and VIII and mixtures thereof, disposed on a support, e.g., one or more inorganic oxides, may be included with the present solid particles and discrete entities and/or may be included on the solid particles and/or discrete entities. As noted previously, the sulfur oxide oxidation component may be associated with, e.g., deposited on, the spinel component of the present discrete entities.

The composition of the solid particles useful in the present invention is not critical, provided that such particles are capable of promoting the desired hydrocarbon conversion. Particles having widely varying compositions are conventionally used as catalyst in such hydrocarbon conversion processes, the particular composition chosen being dependent, for example, on the type of hydrocarbon chemical conversion desired. Thus, the solid particles suitable for use in the present invention include at least one of the natural or synthetic materials which are capable of promoting the desired hydrocarbon chemical conversion. For example, when the desired hydrocarbon conversion involves one or more of hydrocarbon cracking, disproportionation, isomerization, polymerization, alkylation and dealkylation, such suitable materials include acid-treated natural clays such as montmorillonite, kaolin and bentonite clays; natural or synthetic amorphous materials, such as amorphous silica-alumina, silica-magnesia and silica-zirconia composites; crystalline aluminosilicates often referred to as zeolites or molecular sieves and the like. In certain instances, e.g., hydrocarbon cracking and disproportionation, the solid particles preferably include such crystalline aluminosilicate to increase catalytic activity. Methods for preparing such solid particles and the combined solid particles-discrete entities particulate bodies are conventional and well known in the art. Certain of these procedures are thoroughly described in U.S. Patents 3,140,253 and US—E 27,639.

Compositions of the solid particles which are particularly useful in the present invention are those in which the crystalline aluminosilicate is incorporated, in an amount effective to promote the desired hydrocarbon conversion, e.g., a catalytically effective amount, into a porous matrix which comprises, for example, amorphous material which may or may not be itself capable of promoting such hydrocarbon conversion. Included among such matrix materials are clays and amorphous compositions of silica-alumina, magnesia, zirconia, mixtures of these and the like. The crystalline aluminosilicate is preferably incorporated into the matrix material in amounts within the range of 1% to 75%, more preferably 2% to 50%, by weight of the total solid particles. The preparation of crystalline aluminosilicate-amorphous matrix catalytic materials is described in the above-mentioned patents. Catalytically active crystalline aluminosilicates which are formed during and/or as part of the methods of manufacturing the solid particles, discrete entities and/or combined particles are within the scope of the present invention. The solid particles are preferably substantially free of added rare earth metal, e.g., cerium, component disposed on the amorphous matrix material of the catalyst, although such rare earth metal components may be associated with the crystalline aluminosilicate components of the solid particles.

As indicated above, the discrete entities utilized in the present invention comprise an effective amount, preferably a major amount, of at least one metal-containing spinel, preferably alkaline earth metal-containing spinel, which contains a first metal, and a second metal of higher valence than the first. In another aspect, the present discrete entities further comprise a minor amount of at least one additional metal, e.g., platinum group metal, component capable of promoting sulfur dioxide oxidation.

The spinel structure is based on a cubic close-packed array of oxide ions. Typically, the crystallographic unit cell of the spinel structure contains 32 oxygen atoms; one-eighth of the tetrahedral holes (of which there are two per anion) are occupied by divalent metal ion, and one-half of the octahedral holes (of which there are two per anion) are occupied by trivalent metal ions.

This typical spinel structure or a modification thereof is adaptable to many other mixed metal oxides of the type $M^{II}M_2^{III}O_4$ (e.g., $FeCr_2O_4$, $ZnAl_2O_4$ and $Co^{II}Co_2^{III}O_4$), by some of the type $M^{IV}M^{II}_2O_4$ (e.g., $TiZn_2O_4$, and $SnCo_2O_4$), and by some of the type $M^I_2M^{VI}O_4$ (e.g., $Na_2MoO_4$ and $Ag_2MoO_4$). This structure is often symbolized as $X[Y_2]O_4$, where square brackets enclose the ions in the octahedral interstices. An important variant is the inverse spinel structure, $Y[XY]O_4$, in which half of the Y ions are in tetrahedral interstices and the X ions are in octahedral ones along with the other half of the Y ions. The inverse spinel structure is intended to be included within the scope of the term "metal-containing spinel" as used herein. The inverse spinel structure occurs often when the X ions have a stronger preference for octahedral coordination than do the Y ions. All $M^{IV}M_2^{II}O_4$ are inverse, e.g., $Zn(ZnTi)O_4$, and many of the $M^{II}M_2^{III}O_4$ ones are also, e.g., $Fe^{III}(Co^{II}Fe^{III})O_4$, $NiAl_2O_4$, $Fe^{III}(Fe^{II}Fe^{III})O_4$ and $Fe(NiFe)O_4$. There are also many compounds with distorted spinel structures in which only a fraction of the X ions are in tetrahedral sites. This occurs when the preference of both X and Y ions for octahedral and tetrahedral sites do not differ markedly.

Further details on the spinel structure are described in the following references "Modern Aspects of Inorganic Chemistry" by H. I. Emeleus and A. G. Sharpe (1973), pp. 57—58 and 512—513; "Structural Inorganic Chemistry", 3rd edition, (1962) by A. F. Wells, pp. 130, 487—490, 503 and 526; and "Advanced Inorganic Chemistry", 3rd edition, by F. A Cotton and G. Wilkinson (1972), pp. 54—55.

Metal-containing spinels include the following: $MnAl_2O_4$, $FeAl_2O_4$, $CoAl_2O_4$, $NiAl_2O_4$, $ZnAl_2O_4$, $MgTiMgO_4$, $FeMgFeO_4$, $FeTiFeO_4$, $ZnSnZnO_4$, $GaMgGaO_4$, $InMgInO_4$, $BeLi_2F_4$, $SLi_2O_4$, $MoLi_2O_4$, $SnMg_2O_4$, $MgAl_2O_4$, $CuAl_2O_4$, $LiAl_5O_8$, $ZnK_2(CN)_4$, $CdK_2(CN)_4$, $HgK_2(CN)_4$, $ZnTi_2O_4$, $FeV_2O_4$, $MgCr_2O_4$, $MnCr_2O_4$, $FeCr_2O_4$, $CoCr_2O_4$, $NiCr_2O_4$, $ZnCr_2O_4$, $CdCr_2O_4$, $MnCr_2S_4$, $ZnCr_2S_4$, $CdCr_2S_4$, $TiMn_2O_4$, $MnFe_2O_4$, $FeFe_2O_4$, $CoFe_2O_4$, $NiFe_2O_4$, $CuFe_2O_4$, $ZnFe_2O_4$, $CdFe_2O_4$, $MgCo_2O_4$, $TiCo_2O_4$, $CoCo_2O_4$, $ZnCo_2O_4$, $SnCo_2O_4$, $CoCo_2S_4$, $CuCo_2S_4$, $GeNi_2O_4$, $NiNi_2S_4$, $ZnGa_2O_4$,· $WAg_2O_4$, and $ZnSn_2O_4$.

As indicated by the $LiAl_5O_8$ compound referred to above, it is not necessary for the two metals in the spinel structure to be in the ratio 1:2. For example, in this spinel material they are in the atomic ratio of 1:5. In addition, an atomic ratio of the two metals other than that indicated by the classical stoichiometric

4

formula is also possible, as is apparent from, for example, the publications "An Introduction of Crystal Chemistry", A. C. Evans—University Press Cambridge 1948, see page 209 and, especially, 210, and "Structural Inorganic Chemistry", A. F. Wells, The Clarendon Press Oxford, 1945, see pages 332 to 337, especially the passages from line 3 of page 333 to the third line from the bottom of page 335.

The preferred metal-containing spinels for use in the present invention are alkaline earth metal spinels, in particular magnesium aluminate spinel. Lithium containing spinels, which may be produced using conventignal techniques are also preferred for use. With regard to magnesium aluminate spinel, there often are eight Mg atoms and sixteen Al atoms to place in a unit cell ($8MgAl_2O_4$). Other alkaline earth metal ions, such as calcium, strontium, barium and mixtures thereof, may replace all or a part of the magnesium ions. Similarly, other trivalent metal ions, such as iron, chromium, vanadium, manganese, gallium, boron, cobalt and mixtures thereof, may replace all or a part of the aluminum ions.

The metal-containing spinels useful in the present invention may be derived from conventional and well known sources. For example, these spinels may be naturally occurring or may be synthesized using techniques well known in the art. Thus, a detailed description of such techniques is not included herein. However, a brief description of the preparation of the most preferred spinel, i.e., magnesium aluminate spinel, is set forth below. Certain of the techniques described, e.g., drying and calcining, have applicability to other metal-containing spinels.

The magnesium aluminate spinel suitable for use in the present invention can be prepared, for example, according to the method disclosed in U.S. Patent No. 2,992,191. The spinel can be formed by reacting, in an aqueous medium, a water-soluble magnesium inorganic salt and a water-soluble aluminate salt in which the aluminum is present in the anion. Suitable salts are exemplified by the strongly acidic magnesium salts such as the chloride, nitrate or sulfate and the water soluble alkali metal aluminates. The magnesium and aluminate salts are dissolved in an aqueous medium and a spinel precursor is precipitated through neutralization of the aluminate by the acidic magnesium salt. Excesses of acid salt or aluminate are preferably not employed, thus avoiding the precipitation of excess magnesia or alumina. Preferably, the precipitate is washed free of extraneous ions before being further processed.

The precipitate can be dried and calcined to yield the magnesium aluminate spinel. Drying and calcination may take place simultaneously. However, it is preferred that the drying take place at a temperature below which water of hydration is removed from the spinel precursor. Thus, this drying may occur at temperatures below about 260°C (500°F), preferably from about 104°C (220°F) to about 232°C (450°F). Suitable calcination temperatures are exemplified by temperatures ranging from about 427°C (800°F) to about 1093°C (2000°F) or more. Calcination of the spinel precursor may take place in a period of time of at least about one half hour and preferably in a period of time ranging from about 1 hour to about 10 hours.

Another process for producing the presently useful magnesium aluminate spinel is set forth in U.S. Patent 3,791,992. This process includes mixing a solution of a soluble acid salt of divalent magnesium with a solution of an alkali metal aluminate; separating and washing the resulting precipitate; exchanging the washed precipitate with a solution of an ammonium compound to decrease the alkali metal content; followed by washing, drying, forming and calcination steps. In general, as indicated previously, the metal-containing spinels useful in the present invention may be prepared by methods which are conventional and well known in the art.

The metal spinel-based composition may be formed into particles of any desired shape such as pills, cake, extrudates, powders, granules, spheres, and the like using conventional methods. The size selected for the particles can be dependent upon the intended environment in which the final discrete entities are to be used—as, for example, whether in a fixed catalyst bed or circulating catalyst bed reaction system or whether as a separate particle or as part of a mass of combined particles.

Substantially non-interfering proportions of other well known refractory material, e.g., inorganic oxides such as silica, zirconia, thoria and the like may be included in the present discrete entities. Free magnesia and/or alumina (i.e., apart from the alkaline earth metal containing spinel) also may be included in the discrete entities, e.g., using conventional techniques. For example, the discrete entities may include 0.1% to 25% by weight of free magnesia (calculated as MgO). By substantially "non-interfering" is meant amounts of other material which do not have a substantial deleterious effect on the present catalyst system or hydrocarbon conversion process. The inclusion of materials such as silica, zirconia, thoria and the like into the present discrete entities may act to improve one or more of the functions of the discrete entities.

The presently useful lithium-containing spinels, e.g., lithium aluminate spinel, preferably are associated with a minor amount of at least one rare earth metal component.

Cerium or other suitable rare earth or rare earth mixture may be associated with the spinel using any suitable technique or combination of techniques; for example, impregnation, coprecipitation, ionexchange and the like, well known in the art, with impregnation being preferred. Impregnation may be carried out by contacting the spinel with a solution, preferably aqueous, of rare earth; for example, a solution containing cerium ions (preferably $Ce^{-3}$, $Ce^{-4}$ or mixtures thereof) or a mixture of rare earth cations containing a substantial amount (for example, at least 40%) of cerium ions. Water-soluble sources of rare earth include the nitrate and chloride. Solutions having a concentration of rare earth in the range of 3 to 30% by weight are preferred. Preferably, sufficient rare earth salt is added to incorporate 0.05 to 25% (weight), more preferably 0.1 to 15% rare earth, and still more preferably 1.0 to 15% rare earth, by weight, calculated as elemental metal, on the particles.

It may not be necessary to wash the spinel after certain soluble rare earth salts (such as nitrate or acetate) are added. After impregnation with rare earth salt, the spinel can be dried and calcined to decompose the salt, forming an oxide in the case of nitrate or acetate. Alternatively, the spinel, e.g., in the form of discrete particles, can be charged to a hydrocarbon conversion, e.g., cracking unit, with the rare earth in salt form. In this case a rare earth salt with a thermally decomposable anion can decompose to the oxide in the reactor and be available to associate with SOx in the regenerator.

Especially good results were achieved using spinel containing discrete entities such that the concentration of rare earth metal, e.g., cerium, calculated as the metal, is in the range of 1 to 25%, more preferably 2% to 15%, by weight of the total discrete entities.

The present discrete entities preferably further comprise a minor amount of at least one crystalline aluminosilicate capable of promoting the desired hydrocarbon conversion. Typical aluminosilicates have been described above. Preferably, such aluminosilicates comprise 1% to 30%, more preferably 1% to 10%, by weight of the discrete entities. The presence of such aluminosilicates in the present discrete entities acts to increase the overall catalytic activity of the solid particles-discrete entities mixture for promoting the desired hydrocarbon conversion.

As indicated above, in one preferred embodiment the presently useful particulate material, e.g., the discrete entities utilized in the present invention, also contain at least one additional metal, e.g., platinum group metal, component. These additional metal components are defined as being capable of promoting the oxidation of sulfur dioxide to sulfur trioxide at combustion conditions, e.g., the conditions present in the catalyst regenerator. Increased carbon monoxide oxidation may also be obtained by including at least one of the additional metal components. Such metal components are selected from the group consisting of Group IB, IIB, IVB, VIA, VIB, VIIA and VIII of the Periodic Table, the rare earth metals, vanadium, iron, tin and antimony and mixtures thereof and may be incorporated into the presently useful particulate material, e.g., the discrete entities, in any suitable manner. Many techniques for including the additional metal in the particulate material are conventional and well known in the art. The additional metal, e.g., platinum group metal, such as platinum, may exist within the particulate material, e.g., discrete entities, at least in part as a compound such as an oxide, sulfide, halide and the like, or in the elemental state. Generally the amount of the platinum group metal component present in the final discrete entities is small compared to the quantity of the spinel. The platinum group metal component preferably comprises from 0.05 parts-per-million (ppm) to 1%, more preferably 0.05 ppm, to 1,000 ppm, and still more preferably 0.5 ppm to 500 ppm, by weight of the discrete entities, calculated on an elemental basis. Excellent results are obtained when the discrete entities contain 50 ppm to 200 ppm, and in particular 50 ppm to 90 ppm, by weight of at least one platinum group metal component. The other additional metals may be included in the particulate material in an amount effective to promote the oxidation of at least a portion, preferably a major portion, of the sulfur dioxide present to sulfur trioxide at the conditions of combustion, e.g., conditions present in the catalyst regeneration zone of a hydrocarbon catalytic cracking unit. Preferably, the present discrete entities comprise a minor amount by weight of at least one additional metal component (calculated as elemental metal). Of course the amount of additional metal used will depend, for example, on the degree of sulfur dioxide oxidation desired and the effectiveness of the additional metal component to promote such oxidation.

As an alternative to inclusion in the discrete entities, one or more additional metal components may be present in all or a portion of the above-noted solid particles and/or may be included in a type of particle other than either the present solid particles or discrete entities. For example, separate particles comprising at least one additional metal component and porous inorganic oxide support, e.g., platinum on alumina, may be included along with the solid particle and discrete entities to promote sulfur dioxide oxidation.

The additional metal, e.g., platinum group metal, component may be associated with the spinel based composition in any suitable manner, such as by the impregnation of the spinel at any stage in its preparation and either after or before calcination of the spinel based composition. As indicated previously, various procedures for incorporating the additional metal component or components into the particulate material are conventional and well known in the art. Preferably, the additional metal component is substantially uniformly disposed on the spinel of the present discrete entities. One preferred method for adding the platinum group metal to the spinel involves the utilization of a water soluble compound of the platinum group metal to impregnate the spinel. For example, platinum may be added to the spinel by comingling the spinel with an aqueous solution of chloroplatinic acid. Other water-soluble compounds of platinum may be employed as impregnation solutions, including, for example, ammonium chloroplatinate and platinum chloride.

Both inorganic and organic compounds of the platinum group metals are useful for incorporating the platinum group metal component into the present discrete entities. Platinum group metal compounds, such as chlorplatinic acid and palladium chloride are preferred.

It may be desirable to be able to separate the discrete entities from the solid particles, for example, when it is desired to use the solid particles alone for hydrocarbon conversion or where it is desired to recover the discrete entities for other uses or for example, for platinum group metal recovery. This can be conveniently accomplished by preparing the second solid particles in a manner such that they have a different size than the first solid particles. The separation of the first and second solid particles can then be easily affected by screening or other means of size segregation.

As noted above, the presently useful solid particles and discrete entities can be employed in a mass of combined particulate bodies which function as both the solid particles, e.g., promote hydrocarbon conversion, and the discrete entities. Such particulate bodies may be produced in any suitable manner, certain of which methods are conventional and known in the art.

Although this invention is useful in many hydrocarbon chemical conversions, the present catalyst, i.e., mixture comprising solid particles and discrete entities, and process find particular applicability in systems for the catalytic cracking of hydrocarbons and the regeneration of catalyst so employed. Such catalytic hydrocarbon cracking often involves converting, i.e., cracking, heavier or higher boiling hydrocarbons to gasoline and other lower boiling components, such as hexane, hexene, pentane, pentene, butane, butylene, propane, propylene, ethane, ethylene, methane and mixtures thereof. Often, the substantially hydrocarbon feedstock comprises a gas oil fraction, e.g., derived from petroleum, shale oil, tar sand oil, coal and the like. Such feedstock may comprise a mixture of straight run, e.g., virgin, gas oil. Such gas oil fractions often boil primarily in the range of about 204°C (400°F) to about 538°C (1000°F). Other substantially hydrocarbon feedstocks, e.g., other high boiling or heavy fractions of petroleum, shale oil, tar sand oil, coal and the like may be cracked using the catalyst and method of the present invention. Such substantially hydrocarbon feedstock often contains minor amounts of contaminants, e.g., sulfur, nitrogen and the like. In one aspect, the present invention involves inverting a hydrocarbon feedstock containing sulfur and/or sulfur chemically combined with the molecules of hydrocarbon feedstock. The present invention is particularly useful when the amount of sulfur in such hydrocarbon feedstock is in the range of 0.01% to 5%, preferably 0.1% to 3%, by weight of the total feedstock.

Hydrocarbon cracking conditions are well known and often include temperatures in the range of about 454°C (850°F) to about 593°C (1100°F), preferably about 482°C (900°F) to about 566°C (1050°F). Other reaction conditions usually include pressures of up to about 100 psi (6.8 bar); catalyst to oil ratios of about 1 to 2 to about 25 to 1, preferably about 3 to 1 to about 15 to 1; and weight hourly space velocities (WHSV) of from about 3 to about 60. These hydrocarbon cracking conditions may be varied depending, for example, on the feedstock and solid particles or combined particles being used and the product or products wanted.

In addition, the catalytic hydrocarbon cracking system includes a regeneration zone for restoring the catalytic activity of the solid particles or combined particles of catalyst previously used to promote hydrocarbon cracking. Carbonaceous, in particular sulfur-containing carbonaceous, deposit-containing catalyst particles from the reaction zone are contacted with free oxygen-containing gas in the regeneration zone at conditions to restore or maintain the activity of the catalyt by removing, i.e., combusting, at least a portion of the carbonaceous material from the catalyst particles. When the carbonaceous deposit material contains sulfur at least one sulfur-containing combustion product is produced in the regeneration zone and may leave the zone with the regenerator flue gas. The conditions at which such free oxygen-containing gas contacting takes place may vary, for example, over conventional ranges. The temperature in the catalyst regeneration zone of a hydrocarbon cracking system is often in the range of about 482°C (900°F) to about 816°C (1500°F), preferably about 593°C (1100°F) to about 732°C (1350°F) and more preferably about 593°C (1100°F) to about 704°C (1300°F). Other conditions within such regeneration zone may include, for example, pressures up to about 6.8 bar (100 psia), average catalyst contact times within the range of about 3 minutes to about 120 minutes, preferably from about 3 minutes to about 75 minutes. Sufficient oxygen is preferably present in the regeneration zone to completely combust the carbon and hydrogen of the carbonaceous deposit material, for example, to carbon dioxide and water. The amount of carbonaceous material deposited on the catalyst in the reaction zone is preferably in the range of 0.005% to 15%, more preferably 0.1% to 10%, still more preferably 0.1% to 5% by weight of the catalyst. The amount of sulfur, if any, contained in the carbonaceous deposit material depends, for example, on the amount of sulfur in the hydrocarbon feedstock. This deposit material may contain 0.01% to 10% or more by weight of sulfur. At least a portion of the regenerated catalyst is often returned to the hydrocarbon cracking reaction zone.

The solid particles useful in the catalytic hydrocarbon cracking embodiment of the present invention may be any conventional catalyst capable of promoting hydrocarbon cracking at the conditions present in the reaction zone, i.e., hydrocarbon cracking conditions. Similarly, the catalytic activity of such solid particles is restored at the conditions present in the regeneration zone. Typical among these conventional catalysts are those which comprise amorphous silica-alumina and at least one crystalline aluminosilicate having pore diameters of about $8 \times 10^{-4}$ μm (8Å) to about $15 \times 10^{-4}$ μm (15Å) and mixtures thereof. When the solid particles and/or discrete entities to be used in the hydrocarbon cracking embodiment of the present invention contain crystalline aluminosilicate, the crystalline aluminosilicate may include minor amounts of conventional metal promoters such as the rare earth metals, in particular, cerium.

The following examples are provided to better illustrate the invention, without limitation, by presenting several specific embodiments of the process of the invention.

Example I

This example illustrates the production of discrete entities useful in the present invention.

3.2 Kg (7.05 lb) sodium aluminate (analyzed as 29.8% by weight $Na_2O_3$ and 44.85% by weight of $Al_2O_3$) was stirred with $4.55 \times 10^{-3}$ m³ (one gallon) deionized water to bring as much as possible into solution. This

# 0 045 170

was filtered through cloth with a 254 mm (10″) Buchner funnel. The filtered solution was diluted to 8 liters with deionized water.

3.61 Kg (7.95 lb) $Mg(NO_3)_2 6H_2O$ was dissolved in $4.55 \times 10^{-3} m^3$ (one gallon) deionized water, and 166 ml of concentrated $HNO_3$ was added. The solution was diluted to 8 liters with deionized water.

The two final solutions were run simultaneously from burettes into 32 liters deionized water in a $136 \times 10^{-3} m^3$ (30 gallon) rubber lined drum. The mix was stirred vigorously during the addition. Addition of the $Mg(NO_3)_2$ solution required 36 minutes. 2760 ml of the sodium aluminate solution was added during this period. The pH was held between 7.0 and 7.5. After addition of all the magnesium nitrate-containing solution, sodium aluminate solution was added to bring the pH to 8.5. After this, 1080 ml of sodium aluminate solution remained and was discarded.

The mix was held overnight and then filtered with a plate-frame press. The cake was washed in the press with $500 \times 10^{-3} m^3$ (110 gallons) deionized water. The cake was reslurried in $45.5 \times 10^{-3} m^3$ (10 gallons) deionized water. A solution of 26 grams $Mg(NO_3)_2 6H_2O$ in 200 ml deionized water was added to the slurry. The slurry was filtered and washed as before. After a repeat of the slurry, filter, and wash, the cake was dried at about 121°C (250°F) in a forced air drying oven.

The dried product was then hammermilled, first on a 1.27 mm (0.050″) screen (U.S. Standard mesh), then the 0—60 mesh portion was hammermilled again, this time on the 0.25 mm (0.010″) screen. The desirable, fine material was then screened through a 60 mesh screen. The so-obtained product, magnesium aluminate spinel precursor, was then transferred into a 59 mm diameter quartz tube, where it was calcined, in a fluidized state, for 3 hours at 482°C (900°F) with an air flow rate of about 106 liters per hour to form magnesium aluminate spinel.

The resulting magnesium aluminate spinel particles are screened to produce final particles having diameters less than 100 μm.

Example II

Example I is repeated except that final magnesium aluminate spinel particles are impregnated, using conventional techniques, with an aqueous solution of chloroplatinic acid. The resulting particles are dried and calcined and contain about 100 ppm of platinum, by weight of the total platinum-containing particles, calculated as elemental platinum. The platinum is substantially uniformly distributed on the spinel-containing particles.

Example III

Example I was repeated except that the calcined magnesium aluminate spinel was impregnated with cerium.

For cerium impregnation 177 g (0.39 lb) cerium carbonate was slurried in 1820 mls of water and mixed with 350 mls of 70% nitric acid slowly to dissolve the carbonate 1.7 Kg (3.75 lbs) of the calcined magnesium aluminate spinel was placed in a Pyrex (Registered Trade Mark) tray and impregnated with the cerium solution with hand mixing using rubber gloves. After the impregnation was complete, the mix was allowed to equilibrate overnight.

The impregnated product was dried under IR lamps and finally in a 127°C (260°F) oven overnight. The dried product was calcined in a fluidized state in a 59 mm diameter quartz reactor, for 3 hours at 482°C (900°F) with an air flow rate of about 83 l/hr. The resulting magnesium aluminate spinel particles were screened to produce final particles having diameters less than 100 μm and these final particles contained 5% by weight of cerium, calculated as elemental cerium.

Example IV

A quantity of solid particles of a commercially available hydrocarbon cracking catalyst containing about 6% by weight of crystalline aluminosilicate, about 54% by weight amorphous silica-alumina and 40% by weight alpha alumina, and having the same approximate size as the final particles from Example I, is combined with the final particles of Example I so that a mixture of 5 parts by weight of discrete entities and 95 parts by weight of the solid particles results. The catalytic activity of the solid particles is equilibrated by using same (prior to combining with the discrete entities) in commercial fluid bed catalytic cracking service.

The mixture of solid particles and final particles is loaded to a conventional fluid bed catalytic cracking unit (FCCU) and used to crack a petroleum derived gas oil fraction, a combined fresh feed and recycle stream. The fresh gas oil fraction boils in the range of about 204°C (400°F) to about 538°C (1000°F) and is substantially hydrocarbon in nature, containing minor amounts of sulfur and nitrogen as contaminants. Conventional hydrocarbon cracking and catalyst regeneration conditions are employed in the reaction zone and regeneration zone, respectively.

The weight ratio of catalyst particles to total (fresh plus recycle) hydrocarbon feed entering the reaction zone is about 6 to 1. Other conditions within the reaction zone include:

# 0 045 170

| | |
|---|---|
| Temperature, °F | 930 (499°C) |
| Pressure, psia | 15 (1.02 bar) |
| WHSV | 15 |

Such conditions result in about 70% by volume conversion of the gas oil feedstock to products boiling at 204°C (400°F) and below.

The catalyst particles from the reaction zone include about 0.8% by weight of carbonaceous deposit material which is at least partially combusted in the regeneration zone. This carbonaceous material includes a minor amount of sulfur which forms $SO_2$ at the combustion conditions formed in the regeneration zone. Air, in an amount so that amount of oxygen in the regeneration zone is about 1.15 times the amount theoretically required to completely combust this deposit material, is heated to the desired temperature before being admitted to the regeneration zone. Conditions within the regeneration zone include:

| | |
|---|---|
| Temperature, °F | 1100 (593°C) |
| Pressure, psia | 15 (1.02 bar) |
| Average catalyst residence time, min | 30 |

After a period of time, the catalyst is shown to remain effective to promote hydrocarbon cracking in the reaction zone, and reduced emissions of sulfur (as sulfur oxides) from the flue gases of the regeneration zone are obtained (relative to processing in the absence of the final magnesium aluminate spinel-containing particles).

Example V

Example IV is repeated, except that the platinum-containing particles of Example II are used instead of the magnesium aluminate spinel particles of Example I. After a period of time, the catalyst is shown to remain effective to promote hydrocarbon cracking in the reaction zone and carbon monoxide and sulfur dioxide oxidation in the regeneration zone. In addition, reduced emissions of sulfur (as sulfur oxides) from the flue gases of the regeneration zone are obtained (relative to processing in the substantial absence of the platinum-containing particles).

Example VI

Example IV is repeated except that the cerium-containing particles of Example III are used in place of the particles of Example I.

After a period of time, the catalyst is shown to remain effective to promote hydrocarbon cracking in the reaction zone, and reduced emissions of sulfur (as sulfur oxides) from the flue gases of the regeneration zone are obtained (relative to processing in the absence of the final magnesium aluminate spinel-containing particles).

Example VII

Examples I, II and III are repeated, except that the final magnesium aluminate spinel particles, the platinum-containing particles and the cerium-containing particles, respectively, each include about 7% by weight of a crystalline aluminosilicate known to be catalytically active to promote hydrocarbon cracking. The crystalline aluminosilicate is incorporated into the particles using conventional, well known techniques. The platinum, and particularly the cerium, components are included in the particles so that a substantial amount, e.g., greater than about 50%, of the platinum and cerium is associated with the magnesium aluminate spinel of the particles, rather than with the crystalline aluminosilicate. Cerium associated with the crystalline aluminosilicate is substantially less effective, e.g., in reducing SOx emissions, relative to cerium deposited on the magnesium aluminate spinel portion of the particles.

Example VIII

Example IV is repeated three times except that the magnesium aluminate-containing spinel particles produced in Example VII are used in place of the particles of Example I. After a period of time in hydrocarbon cracking service, these catalyst mixtures are shown to be effective to promote hydrocarbon cracking and reduced sulfur emissions from the regeneration zone are obtained. In particular, it is found that the crystalline aluminosilicate present in the discrete entities improves the hydrocarbon cracking in the reaction zone beyond that occurring in a system with discrete entities containing substantially no zeolitic component.

9

Example IX

A mass of combined particles is prepared as follows:

The magnesium aluminate spinel-based discrete entities are prepared by forming an aqueous slurry of magnesium aluminate spinel precursor (produced as in Example I) so that the spinel concentration, calculated as $MgAl_2O_4$, is about 9% by weight. Sufficient crystalline aluminosilicate known to be effective to promote hydrocarbon cracking is added to the slurry so that the final magnesium aluminate spinel-based discrete entities contain, on a dry weight basis, about 10% of such crystalline aluminosilicate. This slurry is stirred for about 1 hour to insure uniformity and then spray dried at a temperature less than that required to eliminate a substantial portion of the water of hydration to form discrete entities. These discrete entities are calcined in an electric muffle furnace using a programmed timer to increase the temperature 149°C (300°F) per hour to 566°C (1050°F) and maintain this temperature for 3 hours. The discrete entities are impregnated with platinum and cerium as in Examples II and III. The final discrete entities contain about 7% by weight of cerium calculated as elemental cerium, and about 100 ppm by weight of platinum. A major portion of the cerium and platinum is associated with the spinel, rather than the crystalline aluminosilicate.

Essentially, all the calcined discrete entities have a maximum dimension of less than about 200 μm. The discrete entities larger than 60 μm are discarded.

The solid particles-binder material is prepared by adding 6000 parts by weight of a solution containing Philadelphia Quartz Company "E" brand sodium silicate solution diluted with an equal weight of water to 3000 parts by weight of dilute (density-1.234) $H_2SO_4$. After these two solutions are thoroughly mixed, 4000 parts by weight of a solution containing 1200 parts by weight of $Al_2(SO_4)_3 \cdot 18H_2O$ is added. Sufficient crystalline aluminosilicate, known to be effective to promote hydrocarbon cracking, is added to the mixture so that the final solid particles-binder material contains, on a dry weight basis, about 10% of such crystalline aluminosilicate. The resulting mixture is let stand to gel. The resulting hydrogel is cut into about 19 mm (3/4") cubes and covered with concentrated $NH_4OH$ diluted with an equal volume of water. This material is let stand overnight and has a final pH of 11. The material is then washed by percolation until free of $Na^+$ and $SO_4$=ion.

500 parts (on a dry weight basis) of the washed hydrogel and 80 parts (on a dry weight basis) of the remaining calcined discrete entities and 10,000 parts by weight of water are thoroughly mulled, ground and mixed with agitation. The resulting slurry is dried in a spray drier. This drier is equipped with a two-fluid nozzle system which uses air at about 1.36 bar gauge (20 psig) to disperse the slurry into the drying chamber. The drying gas, i.e., flue gas from an inline burner, enters the drying chamber at about 399°C (750°F) and exits the chamber at a temperature which ranges from about 152°C (305°F) to 157°C (315°F). This drying gas is introduced into the top of the drying chamber while the slurry is dispersed upward from near the bottom of the chamber. In this way, the material to be dried is exposed to both counter-current flow (during ascent from the nozzle system) and co-current flow (during gravity descent) relative to the downward drying gas flow. The resulting dried particles are calcined in a manner similar to the calcination of the spinel based discrete entities described above. The resulting combined particles are screened to provide particles properly sized for use in a fluidized catalytic bed reaction zone-regenerator hydrocarbon cracking system.

Example X

Example IV is repeated except that the physical mixture of discrete entities and catalyst particles used in Example IV are replaced by the combined particles produced in Example IX. After a period of time, these combined particles are shown to remain effective to promote both hydrocarbon cracking in the reaction zone and to reduce the amount of sulfur atmospheric emissions in the regeneration zone flue gases.

Example XI

Example I is repeated except that $Li(NO_3) \cdot 3H_2O$ is substituted for the $Mg(NO_3)_2 \cdot 6H_2O$. The resulting final lithium aluminate spinel particles have diameters less than 100 μm.

Example XII

The final particles of Example XI are impregnated, using conventional techniques with chloroplatinic acid. The resulting spinel-containing particles are dried and calcined and contain about 100 ppm of platinum, by weight of the total platinum-containing particles, calculated as elemental platinum. The platinum is substantially uniformly distributed on the spinel-containing particles.

Example XIII

The final particles of Example XI are impregnated, using conventional techniques, with cerium-using as aqueous cerium nitrate solution. The resulting spinel-containing particles are dried and calcined and contain about 10% by weight of cerium, calculated as elemental cerium.

Examples XIV to XVI

Example IV is repeated three times except that the final particles of Example I are replaced by the resulting spinel-containing particles of Examples XI, XII and XIII, respectively. In each instance, reduced emissions of sulfur (as sulfur oxides) from the flue gases of the regenerator zone is obtained.

Examples XVII to XXI

Particles having diameters of less than 100 μm of the following spinel materials are prepared using conventional techniques:

| Example | Spinel |
|---------|--------|
| XVII | $FeAl_2O_4$ |
| XVIII | $MnAl_2O_4$ |
| XIX | $MgCr_2O_4$ |
| XX | $Fe_2TiO_4$ |
| XXI | $MgFe_2O_4$ |

Examples XXII to XXVI

Example IV is repeated five additional times except that the final particles of Example I are replaced by the spinel-containing particles of Examples XVII, XVIII, XIX, XX and XXI, respectively. In each instance, reduced emissions of sulfur (as sulfur oxides) from the flue gases of the regenerator zone is obtained.


Examples XXVII and XXVIII

These examples illustrate certain of the surprising benefits of the present invention.

Two blends of particles were prepared for testing. The blends were as follows:

Blend A—5% by weight cerium impregnated magnesium aluminate spinel final particles produced as in Example I, plus 95% by weight of a conventional zeolite-containing hydrocarbon cracking catalyst which had been equilibrated in commercial fluid bed catalytic cracking service.

Blend B—5% by weight cerium impregnated gamma alumina particles containing 5% by weight of cerium, calculated as elemental cerium, and having a particle size in the range of 25 to 100 μm, plus 95% by weight of the same conventional zeolite-containing catalyst as to prepare blend A. Cerium-alumina particles are known to possess good initial sulfur oxide removal activity when used in fluid catalytic cracking service.

Both blends were tested to determine their ability to continue to remove sulfur oxides over a period of time. This test procedure was as follows: Step 1 involved an initial determination of the ability of the blend to remove sulfur oxides from regenerator flue gases. Step one was carried out in a fluid bed catalytic cracking pilot plant known to provide results which are correlatable to results obtained in commercial sized systems. The feedstock and conditions for step 1 were as follows:

Feedstock—mid-continent gas oil containing 2.0% by weight sulfur
Reactor temperature—930°F (499°C)
Regenerator temperature—1100°F (593°C)
Stripper temperature—930°F (499°C)
Pressure—15 psia (1.02 bar)
Approximate catalyst regeneration time—30 minutes
Approximate stripping time—10 minutes
Approximate reaction time—1 minute
Steam as inerts in reactor, 3 mole%.

Step 2 of the test procedure involved continuous and accelerated aging in a fluidized-bed reactor to simulate the type of aging which occurs in commercial fluid-bed catalytic cracking service. The feedstock and conditions utilized in step 2 were as follows:

Feedstock—Gulf Coast gas oil containing 2.0% by weight sulfur
Reactor temperature—930°F (499°C)
Reactor pressure—15 psia (1.02 bar)
Reaction residence time—1 minute
Reaction catalyst/oil weight ratio—6
Stripping temperature—930°F (499°C)
Regenerator temperature—1100°F (593°C)
Regenerator pressure—15 psia (1.02 bar)
Catalyst regenerator residence time—30
Regenerator combustion air flow ratio—20 g air/g coke

Step 3 of the test procedure involved periodically repeating step 1 to determine how much of the blend's activity to remove sulfur oxide had been lost during the aging of step 2.

The amount of sulfur oxides emitted with the flue gases from the regeneration using the blend was used as the basis for determining the blend's ability (or activity) to remove such sulfur oxides.

Results of testing Blends A and B following the above procedures were as follows:

11

# 0 045 170

| Days aged at conditions[1] of step 2 | % of initial activity to remove sulfur oxide retained | |
| --- | --- | --- |
| | Blend A | Blend B |
| 0 | 100 | 100 |
| 2 | 93 | 43 |
| 4 | 89 | 18 |
| 6 | 81 | 8 |

[1] One day of aging at the condition of step 2 is more severe than the aging which would occur in commercial FCC service. Therefore, there is no direct one-on-one correlation between aging in these two aging modes.

These results indicate very clearly that the cerium-magnesium aluminate spinel particles of Blend A maintain sulfur oxide removal activity much longer than the cerium-alumina particles of Blend B. Relatively rapid loss of sulfur removal activity has been one of the major problems with prior art attempts, e.g., cerium on alumina particles, to reduce sulfur oxide emissions. Therefore, these results show that the present invention provides substantial and surprising advantages in reducing sulfur oxide emissions from combustion zones, e.g., regeneration zones of fluid bed hydrocarbon catalytic cracking units.

While this invention has been described with respect to various specific examples and embodiments, it is to be understood that the invention is not limited thereto and that it can be variously practiced within the scope of the following claims.

## Claims

1. A composition of matter characterised in that it comprises, in intimate admixture, (a) solid particles capable of promoting hydrocarbon conversion at hydrocarbon conversion conditions, said solid particles including at least one crystalline aluminosilicate capable of promoting said hydrocarbon conversion, and (b) discrete entities having a composition different from said solid particles and comprising at least one metal-containing spinel which includes a first metal and a second metal having a valency higher than the valence of said first metal and said spinel having a surface area of 25 $m^2/g$ to 600 $m^2/g$, said solid particles being present in a greater amount, by weight, than the discrete entities.

2. A composition as claimed in Claim 1 characterised in that more than 50% by weight, of said solid particles have diameters in the range of 10 microns to 250 microns.

3. A composition as claimed in Claim 1 or Claim 2 characterised in that said discrete entities contain at least 50% by weight of said spinel.

4. A composition as claimed in any one of Claims 1 to 3 characterised in that at least one of said solid particles and discrete entities further comprises a minor, catalytically effective amount of at least one additional metal component capable of promoting the conversion of sulfur dioxide to sulfur trioxide.

5. A composition as claimed in Claim 4 characterised in that said additional metal component is at least one platinum group metal component.

6. A composition as claimed in any one of Claims 1 to 5 characterised in that said spinel comprises alkaline earth metal-containing spinel.

7. A composition as claimed in Claim 6 characterised in that said spinel contains magnesium and aluminum.

8. A composition as claimed in Claim 6 or Claim 7 characterised in that said discrete entities comprise at least one alkaline earth metal spinel and at least one rare earth metal component.

9. A composition as claimed in Claim 8 characterised in that said spinel contains magnesium and aluminum and said rare earth metal component is a cerium component and is present in an amount in the range of 1% to 25% by weight of the total discrete entities.

10. A composition as claimed in any one of Claims 1 to 9 characterised in that said discrete entities further comprise 0.1% to 25% by weight of free magnesia, calculated as MgO.

11. A composition as claimed in any one of Claims 1 to 10 characterised in that said solid particles and discrete entities are separate bodies.

12. A composition as claimed in any one of Claims 1 to 10 characterised in that it comprises particulate bodies containing both said solid particles and said discrete entities.

13. A hydrocarbon conversion process for converting a sulfur-containing hydrocarbon feedstock which comprises (1) contacting said feedstock with solid particles capable of promoting the conversion of said feedstock at hydrocarbon conversion conditions in at least one reaction zone to produce at least one hydrocarbon product and to cause deactivating sulfur-containing carbonaceous material to be formed on said solid particles thereby forming deposit-containing particles: (2) contacting said deposit-containing particles with an oxygen-containing vaporous medium at conditions to combust at least a portion of said carbonaceous deposit material in at least one regeneration zone to thereby regenerate at least a portion of the hydrocarbon conversion catalytic activity of said solid particles and to form a regeneration zone flue gas containing sulfur trioxide; and (3) repeating steps (1) and (2) periodically, characterised in that there are used, in intimate admixture with said solid particles, discrete entities having a composition different from said solid particles and comprising at least one metal-containing spinel including a first metal and a second metal having a valency higher than the valence of said first metal and said spinel having a surface area in the range 25 $m^2/g$ to 600 $m^2/g$, said discrete entities being present in an amount sufficient to reduce the amount of sulfur oxides in said flue gas.

14. A process as claimed in Claim 13 wherein said spinel comprises alkaline earth metal-containing spinel.

15. A process as claimed in Claim 14 characterised in that said spinel contains magnesium and aluminum.

16. A process as claimed in Claim 14 or Claim 15 characterised in that said discrete entities comprise at least one alkaline earth metal-containing spinel and at least one rare earth metal component associated with said spinel.

17. A process as claimed in Claim 16 characterised in that said rare earth metal component comprises cerium.

18. A process as claimed in Claim 17 characterised in that said rare earth metal component is cerium component and is present in an amount of 1% to 25% by weight of said discrete entities.

19. A process as claimed in any one of Claims 13 to 18 characterised in that said conversion comprises hydrocarbon cracking in the substantial absence of added molecular hydrogen, said solid particles and discrete entities being fluidizable and circulating between said reaction zone and said regeneration zone.

20. A process as claimed in any one of Claims 13 to 19 characterised in that said discrete entities contain at least 50% by weight of said spinel.

21. A process as claimed in any one of Claims 13 to 20 characterised in that at least one of said solid particles and discrete entities further comprises a minor, catalytically effective amount of at least one additional metal component capable of promoting the conversion of sulfur dioxide to sulfur trioxide at the conditions of step (2).

22. A process as claimed in Claim 21 characterised in that said additional metal component is at least one platinum group metal component.

23. A process as claimed in any one of Claims 13 to 22 characterised in that said discrete entities contain at least 90% by weight of said spinel.

24. A process as claimed in Claim 13 characterised in that said feedstock is contacted in step (1) with a composition as claimed in any one of Claims 1 to 12.

25. A process as claimed in any one of Claims 13 to 24 characterised in that said solid particles and discrete entities are separate particles.

26. A process as claimed in any one of Claims 13 to 24 characterised in that said solid particles and discrete entities are present in combined particles.

27. A process as claimed in any one of Claims 13 to 26 characterised in that said solid particles include at least one crystalline aluminosilicate capable of promoting said hydrocarbon conversion.

28. A process as claimed in any one of Claims 13 to 27 characterised in that said discrete entities further include a minor, catalytically effective amount of at least one crystalline aluminosilicate capable of promoting said hydrocarbon conversion.

29. A composition as claimed in any one of Claims 1 to 12 characterised in that said discrete entities further include a minor, catalytically effective amount of at least one crystalline aluminosilicate capable of promoting said hydrocarbon conversion at hydrocarbon conversion conditions.

## Patentansprüche

1. Zusammensetzung, dadurch gekennzeichnet, daß sie innig vermischt enthält

a) feste Teilchen, die in der Lage sind eine Kohlenwasserstoffumwandlung bei Kohlenwasserstoffumwandlungsbedingungen zu fördern, wobei die festen Teilchen zumindest ein kristallines Aluminiumsilikat enthalten, das in der Lage ist, die Kohlenwasserstoffumwandlung zu fördern und

b) diskrete Komplexe mit einer von den festen Teilchen verschiedenen Zusammensetzung, die zumindest einen metallhaltigen Spinell enthalten, der aus einem ersten Metall und einem zweiten Metall besteht, wobei das zweite Metall eine höhere Valenz als das erste Metall aufweist und wobei der Spinell eine Oberfläche von 25 $m^2/g$ bis 600 $m^2/g$ besitzt und die festen Teilchen in einer größeren Gewichtsmenge vorhanden sind als die diskreten Komplexe.

2. Zusammensetzung nach Anspruch 1, dadurch gekennzeichnet, daß mehr als 50 Gew.-% der festen Teilchen einen Durchmesser im Bereich von 10 µm bis 250 µm aufweisen.

3. Zusammensetzung nach Anspruch 1 oder 2, dadurch gekennzeichnet, daß die diskreten Komplexe mindestens 50 Gew.-% des Spinells enthalten.

4. Zusammensetzung nach Anspruch 1 bis 3, dadurch gekennzeichnet, daß zumindest eines der festen Teilchen und der diskreten Komplexe weiterhin eine geringere, katalytisch wirksame Menge von zumindest einer zusätzlichen Metall-Komponente, die in der Lage ist, die Umwandlung von Schwefeldioxid in Schwefeltrioxid zu fördern, enthält.

5. Zusammensetzung nach Anspruch 4, dadurch gekennzeichnet, daß die zusätzliche Metallkomponente zumindest eine Platingruppe-Metallkomponente ist.

6. Zusammensetzung nach Anspruch 1 bis 5, dadurch gekennzeichnet, daß der Spinell aus einem Erdalkalimetall-haltigen Spinell besteht.

7. Zusammensetzung nach Anspruch 6 oder 7, dadurch gekennzeichnet, daß der Spinell Magnesium und Aluminium enthält.

8. Zusammensetzung nach Anspruch 6 oder 7, dadurch gekennzeichnet, daß die diskreten Kompklexe zumindest einen Erdalkalimetall-Spinnel und zumindest eine Seltenerdmetall-Komponente enthalten.

9. Zusammensetzung nach Anspruch 8, dadurch gekennzeichnet, daß der Spinell Magnesium und Aluminium enthält und die Seltenerdmetall-Komponente eine Cerium-Komponente ist, die in einer Menge im Bereich von 1 bis 25 Gew.-%, bezogen auf die Gesamtmenge der diskreten Komplexe, vorhanden ist.

10. Zusamensetzung nach Anspruch 1 bis 9, dadurch gekennzeichnet, daß die diskreten Komplexe weiterhin 0,1 bis 25 Gew.-% freies Magnesium, berechnet als MgO, enthalten.

11. Zusammensetzung nach Anspruch 1 bis 10, dadurch gekennzeichnet, daß die festen Teilchen und die diskreten Komplexe getrennte Körper sind.

12. Zusammensetzung nach Anspruch 1 bis 10, dadurch gekennzeichnet, daß sie Feststoffkörper enthält, die sowohl die festen Teilchen als auch die diskreten Komplexe enthalten.

13. Kohlenwasserstoff-Umwandlungs-Verfahren zur Umwandlung eines Schwefel enthaltenden Kohlenwasserstoffausgangsmaterials, enthaltend 1) das in-Kontakt-bringen des Ausgangsmaterials mit den festen Teilchen, die in der Lage sind, die Umwandlung des Ausgangsmaterials bei Kohlenwasserstoff-Umwandlungs-Bedingungen zu fördern, in mindestens einer Reaktionszone um mindestens ein Kohlenwasserstoffprodukt herzustellen und um zu bewirken, daß deaktivierendes Schwefel enthaltendes kohlenstoffartiges Material auf den festen Teilchen gebildet wird, wodurch Teilchen, die eine Ablagerung enthalten, erzeugt werden; 2) das in-Kontakt-bringen von den die Ablagerung enthaltenden Teilchen mit einem Sauerstoff enthaltenden dampfförmigen Medium bei Bedingungen um zumindest einen Teil der kohlenstoffartigen Ablagerungen in mindestens einer Regenerationszone zu verbrennen, um dadurch zumindest einen Teil der katalytischen Wirksamkeit bei der Kohlenwasserstoffumwandlung wiederherzustellen und um eine Regenerationszone mit Rauchgas, das Schwefeltrioxid enthält, zu bilden und 3) die periodische Wiederholung der Schritte 1) und 2), dadurch gekennzeichnet, daß man diskrete Komplexe in inniger Vermischung mit den festen Teilchen verwendet, wobei die diskreten Komplexe eine von den festen Teilchen verschiedene Zusammensetzung aufweisen und zumindest einen Metall-haltigen Spinell enthalten, der aus einem ersten Metall und einem zweiten Metall besteht, wobei die Valenz des zweiten Metalls größer ist als die Valenz des ersten Metalls und der Spinell eine Oberfläche im Bereich von 25 m²/g bis 600 m²/g besitzt und wobei die diskreten Komplexe in einer Menge vorhanden sind, die ausreicht, um die Menge der Schwefeloxide im Rauchgas zu reduzieren.

14. Verfahren nach Anspruch 13, bei dem der Spinell ein Erdalkalimetall-enthaltender Spinell ist.

15. Verfahren nach Anspruch 14, dadurch gekennzeichnet, daß der Spinell Magnesium und Aluminium enthält.

16. Verfahren nach Anspruch 14 oder 15, dadurch gekennzeichnet, daß die diskreten Komplexe mindestens einen erdalkalimetallhaltigen Spinell und mindestens eine Seltenermetall-Komponente, die mit dem Spinell verbunden ist, enthalten.

17. Verfahren nach Anspruch 16, dadurch gekennzeichnet, daß die Seltenerdmetall-Komponente Cerium enthält.

18. Verfahren nach Anspruch 17, dadurch gekennzeichnet, daß die Seltenerdmetall-Komponente eine Cerium-Komponente ist und in einer Menge von 1 bis 25 Gew.-% der diskreten Komplexe vorhanden ist.

19. Verfahren nach Anspruch 13 bis 18, dadurch gekennzeichnet, daß die Umwandlung das Cracken des Kohlenwasserstoffs, im wesentlichen in Abwesenheit von zugegebenem molekularen Wasserstoff, enthält, und daß die festen Teilchen und die diskreten Komplexe fluidisierbar sind und zwischen der Reaktionszone und der Regenerationszone zirkulieren.

20. Verfahren nach Anspruch 13 bis 19, dadurch gekennzeichnet, daß die diskreten Komplexe mindestens 50 Gew.-% des Spinells enthalten.

21. Verfahren nach Anspruch 13 bis 20, dadurch gekennzeichnet, daß mindestens eines der festen Teilchen und diskreten Komplexe weiterhin eine geringere, katalytisch wirksame Menge von zumindest einer zusätzlichen Metall-Komponente, die in der Lage ist, die Umwandlung von Schwefeldioxid in Schwefeltrioxid bei den Bedingungen der Stufe 2) zu fördern, enthält.

22. Verfahren nach Anspruch 21, dadurch gekennzeichnet, daß die zusätzliche Metall-Komponente zumindeste eine Metall-Komponente aus der Platingruppe ist.

23. Verfahren nach Anspruch 13 bis 22, dadurch gekennzeichnet, daß die diskreten Komplexe zumindest 90 Gew.-% des Spinells enthalten.

24. Verfahren nach Anspruch 13, dadurch gekennzeichnet, daß man das Ausgangsmaterial in Stufe 1) mit einer Zusammensetzung gemäß Anspruch 1 bis 12 in Kontakt bringt.

14

25. Verfahren nach Anspruch 13 bis 24, dadurch gekennzeichnet, daß die festen Teilchen und die diskreten Komplexe getrennte Körper sind.

26. Verfahren nach Anspruch 13 bis 24, dadurch gekennzeichnet, daß die festen Teilchen und die diskreten Komplexe in kombinierten Teilchen vorliegen.

27. Verfahren nach Anspruch 13 bis 26, dadurch gekennzeichnet, daß die festen Teilchen zumindest ein kristallines Aluminiumsilicat, das in der Lage ist, die Kohlenwasserstoffumwandlung zu fördern, enthalten.

28. Verfahren nach Anspruch 13 bis 27, dadurch gekennzeichnet, daß die diskreten Komplexe weiterhin eine geringere katalytisch wirksame Menge von zumindest einem kristallinen Aluminiumsilicat, das in der Lage ist, die Kohlenwasserstoffumwandlung zu fördern, enthalten.

29. Zusammensetzung nach Anspruch 1 bis 12, dadurch gekennzeichnet, daß die diskreten Komplexe weiterhin eine geringere, katalytisch wirksame Menge von zumindest einem kristallinen Aluminiumsilikat, das in der Lage ist, die Kohlenwasserstoffumwandlung bei den Kohlenwasserstoffumwandlungsbedingungen zu fördern, enthalten.

## Revendications

1. Composition de matière, caractérisée en ce qu'elle comprend en mélange intime: (a) des particules solides capables d'activer une conversion d'hydrocarbures dans des conditions de conversion d'hydrocarbures, ces particules solides comprenant au moins un aluminosilicate cristallin capable d'activer cette conversion d'hydrocarbures et, (b) des entités discrètes ayant une composition différente de celle des particules solides et comprenant au moins un spinelle contenant des métaux, qui comprend un premier métal et un second métal ayant une valence supérieure à la valence du premier métal et ce spinelle ayant une aire superficielle de 25 m²/g à 600 m²/g, ces particules solides étant présentes en une plus grande quantité pondérale que les entités discrètes.

2. Composition selon la revendication 1, caractérisée en ce que plus de 50% en poids des particules solides ont des diamètres dans la gamme de 10 microns à 250 microns.

3. Composition selon la revendication 1, caractérisée en ce que ces entités discrètes contiennent au moins 50% en poids du spinelle.

4. Composition selon l'une quelconque des revendications 1 à 3, caractérisée en ce qu'au moins soit ces particules solides, soit ces entités discrétes, comprennent de plus, une quantité minieure efficace du point de vue catalytique d'au moins un composant métallique supplémentaire capable d'activer la conversion du dioxyde de soufre en trioxyde de soufre.

5. Composition selon la revendication 4, caractérisée en ce que ce composant métallique supplémentaire est au moins un composant d'un métal du groupe du platine.

6. Composition selon l'une quelconque des revendications 1 à 5, caractérisée en ce que ce spinelle comprend un spinelle contenant un métal alcalino-terreux.

7. Composition selon la revendication 6, caractérisée en ce que ce spinelle comprend du magnésium et de l'aluminium.

8. Composition selon la revendication 6 ou la revendication 7, caractérisée en ce que ces entités discrètes comprennent un moins un spinelle ayant un métal alcalino-terreux et au moins un composant d'un métal du groupe des terres rares.

9. Composition selon la revendication 8, caractérisée en ce que ce spinelle contient du magnésium et de l'aluminium et que ce composant d'un métal du groupe des terres rares, est un composant du cérium et est présent en une quantité dans la gamme de 1% à 25% en poids du total des entités discrètes.

10. Composition selon l'une quelconque des revendications 1 à 9, caractérisée en ce que ces entités discrètes comprennent de plus, 0,1 à 25% en poids de magnésie libre, calculés et tant que MgO.

11. Composition selon l'une quelconque des revendications 1 à 10, caractérisée en ce que ces particules solides et ces entités discrètes sont des corps séparés.

12. Composition selon l'une quelconque des revendications 1 à 10, caractérisée en ce qu'elle comprend des corps particulaires contenant à la fois ces particules solides et ces entités discrètes.

13. Procédé de conversion d'hydrocarbures pour convertir une charge d'alimentation hydrocarbonée contenant du soufre, qui comprend (1) la mise en contact de cette charge d'alimentation avec des particules solides capables d'activer la conversion de cette charge d'alimentation dans des conditions de conversion d'hydrocarbures dans au moins une zone de réaction, pour produire au moins un produit hydrocarboné et provoque la formation d'une matière carbonée contenant du soufre désactivante sur ces particules solides en formant ainsi des particules contenant un dépôt; (2) la mise en contact de ces particules contenant un dépôt avec un milieu à l'état vapeur contenant de l'oxygène dans des conditions pour brûler au moins une portion de cette matière déposée carbonée dans au moins une zone de régénération, de façon à régénérer ainsi au moins une portion de l'activité catalytique de conversion d'hydrocarbures de ces particules solides et à former un gaz de combustion issu de la zone de régénération contenant du trioxyde de soufre; et (3) la répétition périodique des étapes (1) et (2), caractérisé en ce qu'on utilise, en mélange étroit avec ces particules solides, des entités discrètes ayant une composition différente de celle des particules solides et comprenant au moins un spinelle contenant des métaux incluant un premier métal et un second métal ayant une valence supérieure à la valence du premier métal, ce spinelle ayant une aire superficielle dans la gamme de 25 m²/g à 600 m²/g, ces entités discrètes étant présentes en une quantité suffisante pour réduire la quantité des oxydes de soufre présents dans ce gaz de combustion.

14. Procédé selon la revendication 13, dans lequel ce spinelle comprend un spinelle contenant un métal alcalino terreux.

15. Procédé selon la revendication 14, caractérisé en ce que ce spinelle contient du magnésium et de l'aluminium.

16. Procédé selon la revendication 14 ou la revendication 15, caractérisé en ce que ces entités discrètes comprennent au moins un spinelle contenant un métal alcalino-terreux et au moins un composant d'un métal du groupe des terres rares associé à ce spinelle.

17. Procédé selon la revendication 16, caractérisé en ce que ce composant d'un métal du groupe des terres rares comprend du cérium.

18. Procédé selon la revendication 17, caractérisé en ce que ce composant d'un métal du groupe des terres rares est un composant du cérium et qu'il est présent en une quantité de 1% à 25% en poids de ces entités discrètes.

19. Procédé selon l'une quelconque des revendications 13 à 18, caractérisé en ce que cette conversion comprend le craquage d'hydrocarbures en l'absence substantielle d'hydrogène moléculaire ajouté, ces particules solides et ces entités discrètes pouvant être fluidisées et circulant entre la zone de réaction et la zone de régénération.

20. Procédé selon l'une quelconque des revendications 13 à 19, caractérisé en ce que ces entités discrètes contiennent au moins 50% en poids de spinelle.

21. Procédé selon l'une quelconque des revendications 13 à 20, caractérisé en ce qu'au moins soit ces particules solides, soit ces entités discrètes comprennent une quantité minieure efficace du point de vue catalyique d'au moins un composant métallique supplémentaire capable d'activer la conversion du dioxyde de soufre en trioxyde de soufre dans les conditions de l'étape (2).

22. Procédé selon la revendication 21, caractérisé en ce que ce composant métallique supplémentaire est au moins un composant d'un métal du groupe du platine.

23. Procédé selon l'une quelconque des revendications 13 à 22, caractérisé en ce que ces entités discrètes contiennent au moins 90% en poids de ce spinelle.

24. Procédé selon la revendication 13, caractérisé en ce que cette charge d'alimentation est mise en contact, dans l'étape (1), avec une composition selon l'une quelconque des revendications 1 à 12.

25. Procédé selon l'une quelconque des revendications 13 à 24, caractérisé en ce que ces particules solides et ces entités discrètes sont des particules séparées.

26. Procédé selon l'une quelconque des revendications 13 à 24, caractérisé en ce que ces particules solides et ces entités discrètes sont présentes dans des particules combinées.

27. Procédé selon l'une quelconque des revendications 13 à 26, caractérisé en ce que ces particules solides comprennent au moins un aluminosilicate cristallin capable d'activer cette conversion d'hydrocarbures.

28. Procédé selon l'une quelconque des revendications 13 à 27, caractérisé en ce que ces entités discrètes comprennent de plus une quantité mineure, efficace du point de vue catalytique d'au moins un aluminosilicate cristallin capable d'activer cette conversion d'hydrocarbures.

29. Composition selon l'une quelconque des revendications 1 à 20, caractérisée en ce que ces entités discrètes comprennent de plus une quantité mineure efficace du point de vue catalytique d'au moins un aluminosilicate cristallin capable d'activer cette conversion d'hydrocarbures dans des conditions de conversion d'hydrocarbures.